# EUROPÄISCHE PATENTSCHRIFT

(11) **EP 2 410 393 B1**
(45) Veröffentlichungstag und Bekanntmachung des Hinweises auf die Patenterteilung: **18.03.2015**
(21) Anmeldenummer: 11005847.6
(22) Anmeldetag: 18.07.2011
(51) Int. Cl.: G05B 19/4065, A61C 1/00

(54) **Verfahren zum Steuern einer ein torsionselastisches Instrument antreibenden Maschine**
Method for controlling a machine driving a torsionally elastic instrument
Procédé de commande d'une machine entraînant un instrument élastique à la torsion

(30) Priorität: 19.07.2010 DE 102010027631
(43) Veröffentlichungstag der Anmeldung: 25.01.2012
(73) Patentinhaber: Schlumbohm Gmbh & Co. KG, 24616 Brockstedt (DE)
(72) Erfinder: Schlumbohm, Gerald, 24616 Brokstedt (DE)
(74) Vertreter: Tönnies, Jan G.

(56) Entgegenhaltungen:
- EP-A1- 1 905 377
- WO-A1-2010/066337
- DE-A1- 10 219 648
- DE-A1- 19 628 854

## Beschreibung

Es ist bekannt, bei einer ein torsionselastischem Instrument antreibenden Maschine das Antriebsdrehmoment, das dem Gegendrehmoment des Instruments entspricht, zu messen und den weiteren Antrieb in Abhängigkeit von dem gemessenen Antriebsdrehmoment zu steuern.

Das Gegendrehmoment setzt sich aus einem elastischen und einem nicht-elastischem Anteil zusammen, wobei die Größe des elastischen Anteils bei den bisher bekannten Verfahren nicht bestimmt wird, obwohl er zur Beurteilung der Belastung des Instrumentes von hoher Bedeutung ist: Bei einem konischen Instrument weist ein hoher elastischer Anteil des Gegendrehmoments auf eine Klemmung der bruchempfindlichen Spitze des Instruments hin, bei geringem elastischen Anteil wird das Instrument nahe am stabilen Instrumenten-Schaft beansprucht Die bloße Messung des Antriebs-Drehmomentes lässt nicht erkennen, welcher Teil des Instrumentes belastet wird.

Um Instrumentenbruehe zu vermeiden geben die Hersteller der Instrumente, beispielsweise bei konischen Zahnwurzelinstrumenten als Bruchdrehmoment sehr kleine, sich auf die zulässige Beanspruchung an der Instrumentenspitze beziehende Werte an. Wird ein Instrument am dicken Instrumenten-Schaft belastet, wird das zugelassene GrenzDrehmoment aber in diesem Fall unnötig begrenzt, was bei dem Einsatz der Maschine zu erheblichem Zeitverlust führt. Wenn die Hersteller der Instrumente dagegen, um die Arbeitsleistung des Instrumentes nicht zu stark zu begrenzen, ein Grenzdrehmoment wählen, das auf einen Querschnitt bezogen ist, der ein Stück von der dünnen Instrumentenspitze entfernt liegt, können diese Instrumente bei Belastungen an der Spitze brechen.

Das Dokument WO 2010/066337 A1 betrifft ein Verfahren zum Steuern einer ein torsionselastisches Instrument antreibenden Maschine, wobei unterschiedliche Betriebsmodi eingestellt werden können, wie Drehung des Instruments in eine erste Drehrichtung, Drehung des Instruments sequenziell in die erste Drehrichtung um einen ersten Drehwinkel und anschließend in die zweite Drehrichtung um einen zweiten Drehwinkel und Drehung des Instruments in der entgegengesetzten Drehrichtung, wobei die Drehbewegung des Instruments, d.h. Drehzahl, Frequenz, Beschleunigung/Verzögerung, Winkel und Drehrichtung, in Abhängigkeit mindestens zweier Messwerte sowie zweier Drehmomentschwellenwerte erfolgt. Einer dieser Messwerte ist das während des Betriebs am Instrument anliegende Drehmoment, und der andere Messwert ist ein die Drehbewegung des Instruments kennzeichnender Parameter, wie z.B. Drehdauer, Drehzahl, Winkel, Position des Instruments im Wurzelkanal.

Die Erfindung hat somit die Aufgabe, die elastischen Belastung des Instrumentes zu ermitteln, um die Anzahl der Instrumentenbrüche zu reduzieren und die Behandlung durch Zeitersparnis effizienter zu machen.

Erfindungsgemäß wird diese Aufgabe gelöst durch ein Verfahren mit den Merkmalen des Patentanspruchs 1.

Die Unterbrechung des Antreibens kann dabei nach Verstreichen einer vorgegebenen Zeitdauer, bei Überschreiten eines vorgegeben Rotationswinkels oder aber bei Erkennen eines durch Erreichen eines bestimmten Antriebsdrehmoments erkannten Festfressens des Instruments (also bei Erreichen eines bestimmten Antriebsdrehmoments) erfolgen.

Die Erfassung des Verlaufs der Rückstelldrehbewegung kann durch Feststellen des von dieser auf die Maschine aufgebrachten Rückstelldrehmoments erfolgen (der Motor der Maschine also als Generator genutzt wird), es können aber auch an der Antriebswelle des Motors angeordnete Markierungen abgefragt werden.

Die Parameter, mit denen das weitere Antreiben erfolgt, können die an den Motor angelegte Spannung, der diesem zugeführte Strom, die Drehrichtung, das maximale Drehmoment, die Drehzahl, der Drehwinkel und/oder die Drehdauer sein.

Bei dem Instrument kann es sich um einen medizinischen, insbesondere dentalmedizinischen Bohrer oder um eine Feile, insbesondere eine dentaunedixinische Endo-Feile handeln.

Durch die Erfassung, des bei einer Unterbrechung des Antreibens des Instrumentes ermittelten Verlaufs der Rückstellbewegung, kann auf die Verformung des konischen torsionselastischen Instrumentes geschlossen werden: Eine weite Rückstellbewegung lässt auf eine elastischer Verformung über die Instrumeztteztlättge, also eine Belastung auch an der Instrumentenspitze schließen, bei einer kurzen Rückstellbewegung kann dagegen von einer Belastung dicht am stabilen Instrumenten-Schaft ausgegangen werden.

Durch die Erfindung wird also ein Verfahren zum Steuern einer ein torsionselastisches Instrument antreibenden Maschine vorgeschlagen, bei der bei einer Unterbrechung des Antreibens des Bohrers ermittelte Verlauf der Rückstelldrehbewegung des Instruments erfasst und der Parameter des weiteren Antreibens des Instruments anhand einer Auswertung des erfassten Verlaufs der Rückstellbewegung bestimmt wird, wobei die Rückstelldrehbewegung durch den bei der Rückstellung auftretenden Generatorstrom der Maschine oder aber durch besondere Sensoren erfasst werden kann.

Die Unterbrechung des Antreibens (oder aber eine Reduzierung des Antriebsmoments) kann nach Verstreichen einer vorgegebenen Zeitdauer, bei Überschreiten eines vorgegeben Rotationswinkels, insbesondere aber bei Erkennen des Erreichens eines bestimmten Antriebsdrehmoments (also einem "Festfressen") erfolgen.

Die Erfassung des Rückstelldrehmoments kann auch dadurch erfolgen, dass die Maschine nach einer Unterbrechung des Antriebs bei geringem Antriebsdrehmoment mit einer definierten Leistung in die entgegengesetzte Richtung gedreht wird und der Winkel gemessen wird, um den sich die Antriebswelle der Maschine - unterstützt durch das Rückstelldrehmoment des Instruments - dreht.

## Patentansprüche

1. Verfahren zum Steuern einer ein torsionselastisches Instrument antreibenden Maschine, **gekennzeichnet durch**
- Unterbrechen des von der Maschine auf das Instruments aufgebrachten Antriebsdrehmoments,
- Erfassen des Verlaufs der bei der Unterbrechung des Antriebsdrehmoments auf die Maschine wirkenden Rückstelldrehbewegung des Instruments und
- Bestimmen der Parameter des weiteren Antriebs des Instruments anhand einer Ermittlung der elastischen Belastung des Instrumentes **durch** die Auswertung des erfassten Verlaufs der Rückstelldrehbewegung des Instruments.

2. Verfahren nach Anspruch 1, **dadurch gekennzeichnet, dass** die Unterbrechung des Antriebsdrehmoments nach Verstreichen einer vorgegebenen Zeitdauer, bei Überschreiten eines vorgegeben Rotationswinkels oder bei Erkennen eines durch Erreichen eines bestimmten Antriebsdrehmoments erkannten Festfressens des Instruments erfolgt.

3. Verfahren nach Anspruch 1 oder 2, **dadurch gekennzeichnet, dass** die Erfassung des Verlaufs des Rückstelldrehbewegung des Instruments durch elektrooptisches Ermitteln des Rückstelldrehwinkels des Schafts des Instruments erfolgt.

4. Verfahren nach Anspruch 1 oder 2, **dadurch gekennzeichnet, dass** die Erfassung des Verlaufs der Rückstelldrehbewegung des Instruments bei einer Unterbrechung des Antriebsdrehmoments durch Feststellen des von diesem erzeugten Generatorstroms der Maschine erfolgt.

5. Verfahren nach einem der Ansprüche 1 bis 3, **dadurch gekennzeichnet, dass** die Erfassung des Verlaufs der Rückstellungbewegung des Instruments bei einer Unterbrechung des Antriebsmoment und anschließendem Aufbringen eines umgekehrten Antriebsdrehmoments auf das Instrument erfolgt.

6. Verfahren nach einem der vorangehenden Ansprüche, **dadurch gekennzeichnet, dass** die Parameter, mit denen das weitere Antreiben erfolgt, die an den Motor angelegte Spannung, der diesem zugeführte Strom, die Drehrichtung, das maximale Drehmoment, die Drehzahl, der Drehwinkel und/oder die Drehdauer ist.

7. Verfahren nach einem der vorangehenden Anspruch, **dadurch gekennzeichnet, dass** das Instrument ein medizinischer, insbesondere ein dentalmedizinischer Bohrer oder eine Feile, insbesondere eine dentalmedizinische Endo-Feile ist.

## Claims

1. A method for controlling a machine driving a torsionally elastic instrument, **characterized by**
- interrupting the drive torque applied to the instrument by the machine,
- detecting the course of the restoring rotary motion of the instrument that acts on the machine when the drive torque is interrupted, and
- determining the parameters of the further drive of the instrument using a determination of the elastic loading of the instrument by evaluating the detected course of the restoring rotary motion of the instrument.

2. The method according to Claim 1, **characterized in that** the interruption of the drive torque takes place after a predetermined period has expired, when a predetermined angle of rotation has been exceeded, or when seizing of the instrument detected by reaching a specific drive torque takes place.

3. The method according to Claim 1 or 2, **characterized in that** detection of the course of the restoring rotary motion of the instrument takes place by electro-optically determining the restoring rotary angle of the shaft of the instrument.

4. The method according to Claim 1 or 2, **characterized in that** detecting the course of the restoring rotary motion of the instrument takes place in the case of an interruption of the drive torque by determining the generator current, generated thereby, of the machine.

5. The method according to one of Claims 1 to 3, **characterized in that** detecting the course of the restoring motion of the instrument takes place in the case of an interruption of the drive torque and subsequently applying an inverse drive moment to the instrument.

6. The method according to one of the preceding claims, **characterized in that** the parameters, using which the further drive action takes place, are the voltage applied to the motor, the current supplied to it, the direction of rotation, the maximum torque, the rotational speed, the angle of rotation, and/or the duration of the rotation.

7. The method according to one of the preceding claims, **characterized in that** the instrument is a medical drill, in particular a dental-medical drill or a file, in particular a dental-medical endo file.

## Revendications

1. Procédé de commande d'une machine entraînant un instrument à torsion élastique **caractérisée par**
- une interruption du couple d'entraînement installé sur l'instrument par la machine,
- enregistrement du parcours du mouvement giratoire de retour de l'instrument agissant sur la machine au moment de l'interruption du couple d'entraînement et
- la détermination des paramètres du reste de l'entraînement de l'instrument au moyen de la détermination de la charge élastique de l'instrument via une évaluation du parcours enregistré du mouvement giratoire de retour de l'instrument.

2. Procédé selon la Revendication 1, **caractérisé en ce que** le couple d'entraînement est interrompu à la fin d'une période déterminée, en cas de dépassement d'un angle de rotation donné ou en cas de détection d'un grippage dû à un certain couple d'entraînement.

3. Procédé selon la Revendication 1 ou 2, **caractérisé en ce que** l'enregistrement du parcours du mouvement giratoire de retour de l'instrument se fait grâce à la détermination électrooptique de l'angle giratoire de retour de la tige de l'instrument.

4. Procédé selon la Revendication 1 ou 2, **caractérisé en ce que** l'enregistrement du parcours du mouvement giratoire de retour de l'instrument se fait lors de l'interruption du moment giratoire d'entraînement via le contrôle du courant du générateur produit par ce dernier.

5. Procédé selon les Revendications 1 à 3, **caractérisé en ce que** l'enregistrement du parcours du mouvement de retour de l'instrument se fait lors de l'interruption du moment d'entrainement suivi de l'application sur l'instrument d'un couple d'entraînement giratoire inversé.

6. Procédé selon une des revendications précédentes, **caractérisé en ce que** les paramètres définissant la suite de l'entraînement sont la tension appliquée au moteur, le courant alimentant ce dernier, le sens de rotation, le couple giratoire maximum, le régime, l'angle de rotation et/ou la durée de rotation.

7. Procédé selon une des revendications précédentes, **caractérisé en ce que** l'instrument est une fraise médicale, et plus particulièrement dentaire, ou une lime fine, en particulier une endolime dentaire.
